# EUROPEAN PATENT APPLICATION

(11) **EP 2 474 943 A1**
(43) Date of publication of application: **11.07.2012**
(21) Application number: 12000059.1
(22) Date of filing: 05.01.2012
(51) Int. Cl.: G06Q 10/00, G08G 1/005

(54) **Mobile device-based automatic parking location recorder and reminder using on-board diagnostics**

(30) Priority: 10.01.2011 US 987183
(71) Applicant: Deutsche Telekom AG, 53113 Bonn (DE)
(72) Inventor: Choi, Yong Hoo, Mountain View California 94041 (US); Heitmann, Marcus, 53175 Bonn (DE)
(74) Representative: Kampfenkel, Klaus

(57) **Abstract**

A method for assisting a vehicle user in locating a vehicle when parked includes detecting via a mobile device that the vehicle has been placed in a parked state and, in response to detecting that the vehicle has been placed in a parked state, automatically retrieving the vehicle location to the mobile device and recording the vehicle location on the mobile device. The method further entails providing, in response to a request from the user to locate the parked vehicle, instructions to the user to guide the user to the parked vehicle.

## Description

### FIELD

This invention relates to a vehicle tracking and, more particularly, to a system and method for automatically recording a location of a parked vehicle and providing an external reminder of the vehicle location.

### BACKGROUND

While motorized vehicles changed the course of the last century and provide many benefits to humans, they do have certain longstanding yet unsolved disadvantages. As a primary example of such disadvantages, drivers often forget where they have parked their vehicle, and must then spend a certain amount of time and effort in attempting to locate the vehicle. This is especially true in large and/or complex parking areas such as large garages. Of course, if the user has the presence of mind, they may proactively force themselves to remember or write down the location where they have parked their vehicle. However, users often forget to take such step. Moreover, even if the user does remember to commit the location to memory or write it down, the passage of time may undo the best intentions, since the user may again simply forget the location or lose the note recording the location.

### SUMMARY

In one aspect the invention includes a method for assisting a vehicle user in locating a vehicle when parked includes detecting via a mobile device that the vehicle has been placed in a parked state and, in response to detecting that the vehicle has been placed in a parked state, automatically retrieving the vehicle location to the mobile device and recording the vehicle location on the mobile device. The method further entails providing, in response to a request from the user to locate the parked vehicle, instructions to the user to guide the user to the parked vehicle.

In another aspect the invention includes an apparatus for assisting a vehicle user in locating a parked vehicle. According to this aspect, the apparatus includes a wireless mobile device for detecting that the vehicle has parked, for automatically recording the vehicle location and for providing instructions to the user to guide the user to the parked vehicle. A vehicle interface module is included for communicating vehicle location and operating parameters to the mobile device.

In yet another aspect the invention includes a computer-readable medium having thereon computer-readable instructions for locating a parked vehicle. Within this aspect, the instructions include instructions for receiving a user request at a mobile device to locate a parked vehicle, instructions for reading a computer-readable memory of the mobile device to identify a current location of the parked vehicle, instructions for interfacing with a computer-readable electronic location sensor on the mobile device to determine a current location of the mobile device, and instructions for displaying via a graphical user interface of the mobile device instructions to travel to the current vehicle location from the current location of the mobile device.

### BRIEF DESCRIPTION OF THE DRAWINGS

Other features and advantages will be appreciated from this description and accompanying figures of which:

FIG. 1 depicts a system architecture according to an embodiment of the invention;

FIG. 2 is a flow chart illustrating a process flow for executing vehicle location identification in an embodiment of the invention;

FIG. 3 is a schematic drawing depicting an example of a parking location reminder display in accordance with an embodiment of the invention; and

FIG. 4 is a schematic drawing depicting an example of an alternative parking location reminder display in accordance with an embodiment of the invention.

### DETAILED DESCRIPTION

As used herein, the term "On-Board Diagnostics" (OBD) is a generic term referring to a vehicle's self-diagnostic and reporting capability. OBD systems provide the vehicle owner or a repair technician with access to state information for various vehicle sub-systems. The amount of diagnostic information available via OBD has varied widely since the introduction in the early 1980s of on-board vehicle computers. Early instances of OBD would simply illuminate a malfunction indicator light, or MIL, if a problem was detected, but would not provide any information as to the nature of the problem.

Modern OBD implementations use a standardized fast digital communications port to provide real-time data in addition to a standardized series of diagnostic trouble codes, or DTCs, which allow one to identify and remedy malfunctions within the vehicle. Various sensor values including but not limited to speed, RPM (Revolution per Minute), 02 sensor, MAF (Mass Air Flow) rate, and so on, can be acquired through the OBD port. Based on these sensor values, the operation status of the vehicle may be interpreted.

In embodiments, the invention utilizes information from the OBD port in addition to other information and calculations to detect vehicle parking and record a location for the vehicle, and remind a user of the location. In greater detail, a device according to an embodiment of the invention automatically detects whether the host vehicle is parked based on vehicle operational information retrieved from the OBD port. The device can communicate with the OBD port via wired or wireless media using various converters. Examples of the communication medium include but are not limited to WiFi, BLUETOOTH, USB, SerialCable, and so on.

Once the device detects that the vehicle is parked and no longer in use, it automatically records the current location as a parking location using its own geo-localization system. Geolocation information can be acquired by various methods such as GPS (Global Positioning System), mobile network-based (e.g. CDMA, GSM, etc.) triangulation, magnetic markers, and so on.

Subsequently, if driver desires to return to their vehicle but is not aware of the location of the vehicle, the device shows the direction to the parked vehicle using the current location and orientation information of the driver acquired from the geo-localization device, in conjunction with the recorded parking location information. The direction information may be conveyed to the user via textual, graphical, audio, and/or video formats. For example, the device may display a route from the user's current location to the parked vehicle on a graphical map. Alternatively, the device may provide turn-by-turn navigation directions to reach the location of the vehicle on foot or by other means.

In an embodiment of the invention, the primary functionalities, including monitoring the operational status of the vehicle to determine whether the vehicle is parked, as well as then recording the parking location of the vehicle, are not installed in the vehicle but reside on a mobile device. As such, no special technique is required for installation of the system in an embodiment of the invention.

Since communications between the mobile device and the OBD port on the vehicle are executed via the OBD protocol standard in an embodiment of the invention, the system can be easily applied to any modern vehicles (manufactured since 1996). Moreover, the recognition of the parking status of the vehicle is fully automatic so that the driver need not take special precautions to initiate recording of the parking location of the vehicle.

In an embodiment of the invention, no communication is required between the mobile device and the vehicle to enable the driver to return to their vehicle using the device. As such, there is no need in this embodiment for a specific counter-part module in the vehicle consuming the battery power of the vehicle.

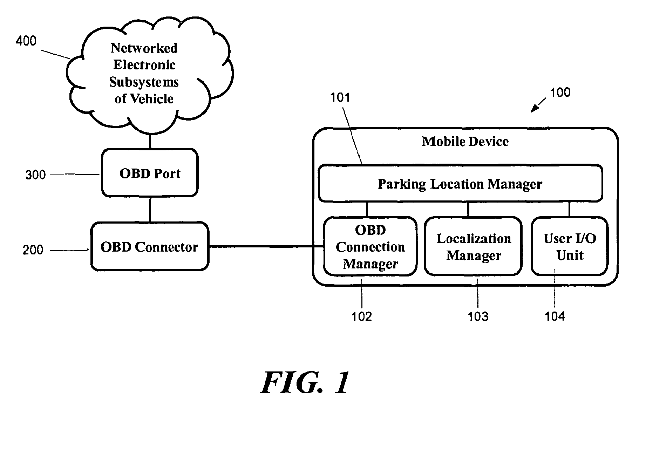

A system architecture according to an embodiment of the invention is shown in FIG. 1. The illustrated system consists of two primary components in this embodiment, namely a mobile device (100) and an OBD connector (200). The mobile device (100) consists of a Parking Location Manager (101), an OBD connection manager (102), a Localization Manager (103), and a User I/O Unit (104).

The mobile device (100) may be a cell phone, personal digital assistant, communication enabled entertainment device, net book computer, lap top computer, or any other mobile computing device capable of making the connections and computations discussed herein. The OBD connector (200) is a hardware device that is integral with or connected permanently or temporarily into the OBD port to interface with and pass communications to or from the port.

The modules discussed, e.g., the Parking Location Manager (101), OBD connection manager (102), Localization Manager (103), and User I/O Unit (104) are software modules in an embodiment of the invention. In this embodiment, the modules are implemented via the computer execution of computer-executable instructions (e.g., code, program, routines, etc.) stored on a non-transient computer-readable media such as a magnetic or optical storage medium, a flash drive, PROM, etc.

In operation according to an embodiment, an OBD Port (300) receives an information request from the external device 100 and responds with the requested information. In various embodiments of the invention, the requested information may be vehicle speed, engine RPM (Revolution per Minute), and MAF rate, retrieved from the networked electronic subsystem (400). The electronic subsystems (400) are networked in an embodiment via one or more vehicular bus protocol such as CAN (Controller Area Network), J1850, FlexRay, and so on.

In an embodiment, the OBD Connector (300) translates from an internal bus signal of the vehicle into an external network signal to send data to the device 100, and may also translate an external network signal received from the device 1200 into an internal bus signal to allow communication from the device 100 to the OBD system or a networked subsystem. The external network connected to the OBD Connector is implemented in an embodiment to operate according to one or both of a wired protocol (USB, SerialCable, etc.) and a wireless protocol (WiFi, Bluetooth, etc.).

In operation, the OBD connection manager (102) creates a wired and/or wireless network connection to the OBD connector (300), sends a vehicular information request to the OBD connector (300), and receives the corresponding information from it. Also, OBD connection manager (102) provides the OBD connection status and vehicular information to parking location manager (101)

The localization manager (103) provides parking location manager with the orientation (e.g. angle to North) and current location information of the mobile device. To acquire the orientation and location information, the localization manager (103) may utilize various geolocation methods including GPS (Global Positioning System), mobile network triangulation (e.g. CDMA, GSM, etc.), magnetic markers, and so on.

The user I/O unit (104) receives various user inputs for operating the mobile devices, e.g., screen touch, button click, voice command, and so on, and provides users with various forms of output, e.g., maps, graphics, texts, voice, and so on in order to inform users of the location of their vehicle and/or the direction to their vehicle.

The parking location manager (101) determines the parking status of vehicle based on the vehicular operational information gathered from OBD connection manager (102), records the geolocation of the parked vehicle acquired from localization manager (103), and informs users of the location of their vehicle and/or the direction to their vehicle based on the location and orientation information of the mobile device acquired from localization manager (103) through user I/O unit (104).

As noted above, the parking location manager (101) determines the parking status of vehicle. This may be accomplished in a number of ways. In an embodiment of the invention, the parking manager (101) determines that the vehicle is parked or no longer in use if no valid network connection exists between the mobile device and the vehicle's OBD port, meaning that the user and accompanying device are out of range of the OBD port. Alternatively or additionally, the vehicle is determined to be parked if both the engine RPM and vehicle speed are 0 for engine-based vehicles. In an embodiment, the vehicle is determined to be parked if the vehicle's bus system is not supplied with power for engine-based and/or electric/hybrid vehicles.

For vehicles having user selectable gearing, the vehicle is also deemed to be parked if the vehicle's gear position is "P" (Parking) mode. Gear information is not part of the standard OBD protocol, but can be made available on top of the OBD standard protocol if desired, as it is already in some OEM-specific protocols implemented on top of the OBD standard protocol.

If the vehicle is not deemed to be parked via one of the foregoing mechanisms or otherwise, then the vehicle is deemed to be in use. The parking location manager (101) initiates recording of the current location of the vehicle as a parking location at the time that the parking status changes from "in use" into "parked."

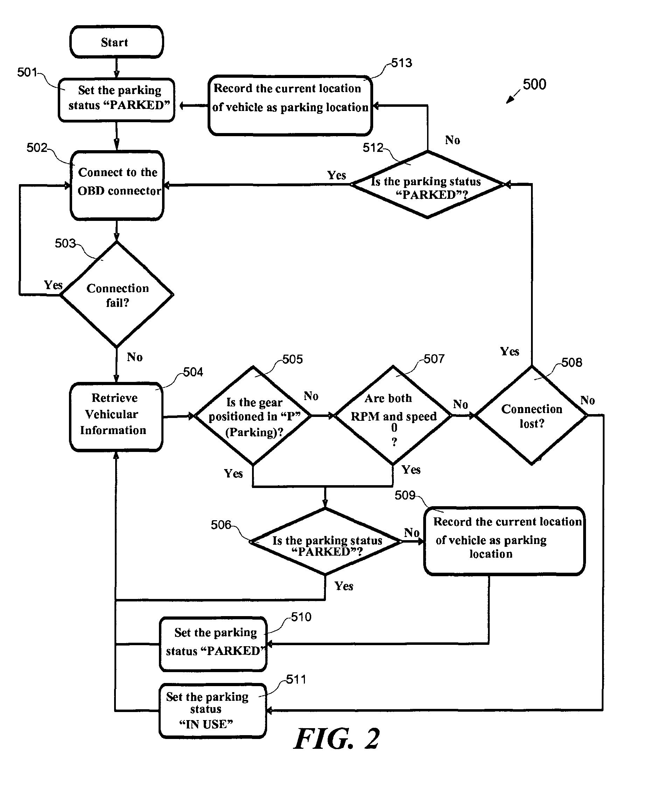

FIG. 2 depicts a logical flow of a process 500 for automatic parking recognition and location recordation according to an embodiment of the invention. The process 500 may be triggered by an event that indicates a possible parking status or may be periodically run. At stage 501 of the process 500, the parking status is set to "Parked" and the process 500 flows to stage 502, wherein mobile device connects to the OBD connector. If the connection fails at stage 503, then the process retires stage 502. Otherwise, the process 500 flows to stage 504, wherein the device retrieves vehicular information via the connection, e.g., speed, RPM, parking selector position, etc.

Given the retrieved vehicular information, the process 500 flows to stage 505, wherein the device determines whether the gear selector is in "Park." If so, the process 500 flows to stage 506, wherein it determines whether the parking status is "Parked." Similarly, if at stage 505 is it determined that the gear selector is in "Park" then the process 500 flows to stage 507, wherein it is determined whether both speed and RPM are zero. If so, the process 500 flows to stage 506.

Having determined whether the parking status is "Parked" at stage 506, the process 500 returns to stage 504 if the status is already "Parked." Otherwise, the process500 flows to stage 509, wherein the device records the current location of the vehicle as the parking location and moves to stage 510 to set the status of the vehicle as "Parked' before returning to stage 304.

If both of stages 505 and 507 return a negative, the process 500 flows to stage 508, wherein the device determines whether the connection to the OBD connector is lost. If not, the process flows to stage 511 and marks the vehicle status as "in use." Otherwise, the process 500 flows to stage 512 to determine whether the parking status is already "Parked." If so, the process 500 returns to stage 502. However, if the parking status is not already "Parked," the process 500 flows to stage 513, records the current vehicle location as its parking location, and returns to stage 501.

With respect to conveying the parking location information to the device user, this information can be provided in any one or more of a variety of formats. For example, a textual, graphical, audio, or video format may be used. As an example, of a graphical format, the device may display a directional arrow to the vehicle as well as other optional information, e.g., distance to the parked vehicle.

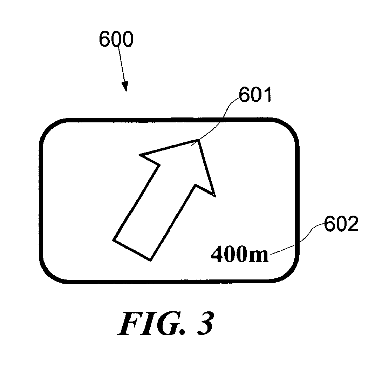

One example format is shown in the schematic user interface 600 as shown in FIG. 3. The illustrated user interface 600 includes an arrow 601 showing the direction to the parked vehicle. The display 600 also includes, in this embodiment, a distance indicator 602 expressing the distance from the user's current location to the vehicle location.

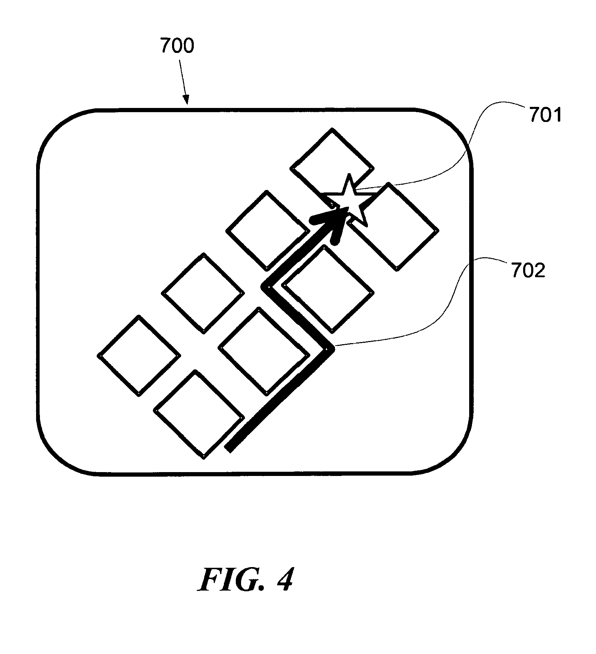

Alternatively, the device may display a route from the user's (device's) current location to the parked vehicle. A display 700 of this type is shown schematically in FIG. 4. The display 700 includes a vehicle location marker 701, as well as an arrow 702 marking the route to be taken by the user to reach the vehicle location 701. As noted above, other forms and formats of information may be given additionally or alternatively to aid the user in locating the vehicle. As one further example, the device may provide the user with audible or visual turn-by-turn navigational direction to reach the location of the vehicle on foot.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method for assisting a vehicle user in locating the vehicle when parked, the method comprising:
detecting via a mobile device (100) that the vehicle has been placed in a parked state;
in response to the step of detecting, automatically retrieving the vehicle location to the mobile device (100) and recording the vehicle location on the mobile device (100); and
providing, in response to a request from the user to locate the parked vehicle, instructions to the user to guide the user to the parked vehicle.

2. The method for assisting a vehicle user according to claim 1, wherein detecting via the mobile device (100) that the vehicle has been placed in the parked state comprises determining that the vehicle speed and engine RPM are zero.

3. The method for assisting a vehicle user according to claim 2, wherein detecting via the mobile device (100) that the vehicle has been placed in the parked state further comprises determining that a gear selector associated with the vehicle speed has been placed in a "park" position.

4. The method for assisting a vehicle user according to anyone of the claims 1 to 3, wherein detecting via the mobile device (100) that the vehicle has been placed in a parked state includes communicating between the mobile device and the vehicle via an on-board diagnostics port (300) associated with the vehicle, and/or wherein retrieving the vehicle location to the mobile device (100) includes communicating between the mobile device (100) and the vehicle via an on-board diagnostics port associated with the vehicle, and/or
wherein the step of providing instructions to the user to guide the user to the parked vehicle includes providing instructions to the user via a graphical user interface of the mobile device (100), and/or
wherein the instructions comprise turn by turn directions from the user's current location to the vehicle's parked location.

5. The method for assisting a vehicle user according to claim 4, wherein the instructions comprise a direction indicator and a distance indicator for moving from the user's current location to the vehicle's parked location, and/or
wherein the instructions comprise a map display of the user's current location, the vehicle's parked location, and a route between the user's current location and the vehicle's parked location.

6. An apparatus for assisting a vehicle user in locating a parked vehicle, the apparatus comprising:
a wireless mobile device (100) for detecting that the vehicle has parked, automatically recording the vehicle location and providing instructions to the user to guide the user to the parked vehicle; and
a vehicle interface module for communicating vehicle location and operating parameters to the mobile device (100).

7. The apparatus for assisting a vehicle user in locating a parked vehicle of claim 6, wherein the vehicle interface module is an on-board diagnostics interface module for interfacing with an on-board diagnostics port of the vehicle.

8. The apparatus for assisting a vehicle user in locating a parked vehicle of claim 6 or 7, wherein the wireless mobile device (100) further includes:
a parking location manager (101);
an on-board diagnostics connection manager (102);
a localization manager (103); and
a user interface (104).

9. The apparatus for assisting a vehicle user in locating a parked vehicle of claim 8, wherein the on-board diagnostics connection manager (102) is configured to create at least one of a wired and wireless network connection to the vehicle and send an on-board diagnostics information request to the vehicle and receive corresponding information from the vehicle.

10. The apparatus for assisting a vehicle user in locating a parked vehicle of claim 9, wherein the received information includes one or more of vehicle speed, engine RPM, and MAF rate.

11. The apparatus for assisting a vehicle user in locating a parked vehicle of claim 9 or 10, wherein the parking location manager (101) is configured to receive on-board diagnostics connection status and vehicle information from the on-board diagnostics connection manager (102), and/or wherein the localization manager (103) is configured to provide the orientation and current location of the mobile device to the parking location manager, and/or
wherein the parking location manager (101) is configured to determine the parking status of the vehicle based on the vehicle information received from on-board diagnostics connection manager (102) and to acquire the location of the parked vehicle from the localization manager (103), and/or
wherein the parking location manager (101) is configured to determine that the vehicle is parked when no valid network connection exists between the mobile device (100) and the vehicle.

12. The apparatus for assisting a vehicle user in locating a parked vehicle of anyone of the claims 8 to 11, wherein the vehicle includes a vehicle bus system, and wherein the parking location manager (101) is configured to determine that the vehicle is parked when the vehicle bus system is not supplied with power.

13. A computer-readable medium having thereon computer-readable instructions for locating a parked vehicle, the instructions comprising:
instructions for receiving a user request at a mobile device (100) to locate a parked vehicle;
instructions for reading a computer-readable memory of the mobile device to identify a current location of the parked vehicle;
instructions for interfacing with a computer-readable electronic location sensor on the mobile device to determine a current location of the mobile device; and
instructions for displaying via a graphical user interface of the mobile device instructions to travel to the current vehicle location from the current location of the mobile device.
